Europäisches Patentamt

European Patent Office

Office européen des brevets

(19)

(11) **EP 0 870 144 B1**

(12) **FASCICULE DE BREVET EUROPEEN**

(45) Date de publication et mention
de la délivrance du brevet:
**17.10.2001 Bulletin 2001/42**

(51) Int Cl.[7]: **F16L 11/08**, F16L 11/16,
F16L 1/16

(21) Numéro de dépôt: **96943193.1**

(22) Date de dépôt: **24.12.1996**

(86) Numéro de dépôt international:
**PCT/FR96/02077**

(87) Numéro de publication internationale:
**WO 97/27416 (31.07.1997 Gazette 1997/33)**

(54) **UTILISATION D'UNE CONDUITE FLEXIBLE ENSOUILLEE**

VERWENDUNG EINER VERGRABENEN BIEGSAMEN ROHRLEITUNG

USE OF A BURIED FLEXIBLE PIPELINE

(84) Etats contractants désignés:
**DK FR GB NL**

(30) Priorité: **22.01.1996 FR 9600656**

(43) Date de publication de la demande:
**14.10.1998 Bulletin 1998/42**

(73) Titulaire: **COFLEXIP**
**75116 Paris (FR)**

(72) Inventeurs:
• **KODAISSI, Elie**
**F-76000 Rouen (FR)**

• **ESTRIER, Pascal**
**F-76490 Saint-Wandrille-Rancon (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
EP-A- 0 302 784          WO-A-91/15694
WO-A-92/00481          FR-A- 2 294 380
FR-A- 2 590 958

**Description**

La présente invention concerne les conduites flexibles utilisées pour le transport de fluides, tels que par exemple des bruts de gisement, sur le fond sous-marin entre des installations d'exploitation sous-marines ou entre des installations d'exploitation sous-marines ou de surface et des installations d'exploitation côtières. De telles conduites flexibles sont du type appelé "flow line".

Les conduites flexibles du type "flow line" peuvent, dans certains cas, être protégées lorsqu'elles sont utilisées sur des fonds sous-marins en étant recouvertes d'une certaine hauteur de sédiments ou d'un matériau de remblai, appelée hauteur de couverture, de manière à être à l'abri de toute détérioration due à la navigation ou à l'environnement ou dans le but de ne pas être soumises à l'action du courant et/ou de la houle.

Cette protection peut typiquement s'effectuer en creusant une tranchée ou sillon dans le fond sous-marin, en déposant la conduite flexible dans cette tranchée, puis en laissant la tranchée se combler naturellement ou, de préférence, en comblant la tranchée. On parle dans ce cas "d'ensouillage".

Il existe également d'autres façons de protéger une conduite flexible, par exemple le recouvrement de la conduite flexible, posée sur le fond sous-marin, par des pierres ou tout autre matériau de remblai, encore appelé "rock dumping" ou "gravel dumping", ou par un sac rempli de graviers ou de ciment comme décrit dans le brevet FR 2 602 300. On parle alors de "sand bagging".

Dans tous les cas, le problème d'une variation de la longueur de la conduite flexible ainsi protégée sous l'effet de la pression interne ou de dilatations d'origine thermique (les variations de température pouvant atteindre 100°C et plus) se pose, car la conduite flexible ensouillée ou recouverte n'est pas libre de se déformer latéralement ou vers le bas et son allongement, localisé dans des zones singulières de plus faible hauteur de couverture ou de sédiments fluidisés, peut alors conduire à la formation d'une ou plusieurs boucles de flambage de hauteur importante et à l'émergence de toute ou partie de la conduite flexible, ce qui est bien entendu inacceptable.

On se reportera utilement à la publication de l'Institut Français du Pétrole intitulée "Flambage vertical des conduites ensouillées", publiée dans la revue de l'Institut Français du Pétrole, volume 37, n°1, Janvier/février 1982, qui examine des points de vue théorique et expérimental le risque de flambage des conduites flexibles et de formation d'au moins une boucle de flambage, en fonction de la pression à l'intérieur de la conduite flexible et de la raideur de cette dernière.

Depuis 1980, la demanderesse a fabriqué et posé plusieurs centaines de kilomètres de conduites flexibles ensouillées ou recouvertes. Ces conduites présentent toutes une armure de résistance à composante circonférentielle de la pression interne, appelée voûte de pression, et des armures de résistance principalement à la traction, appelées armures de traction, et tendent à s'allonger sous l'effet d'une augmentation de la pression interne. Les armures de traction sont surdimensionnées pour conférer à la conduite une raideur importante et bénéficier du fait que la pression critique, c'est-à-dire la pression interne à laquelle doit être soumise la conduite flexible pour provoquer l'apparition d'une boucle de flambage, est d'autant plus grande que la conduite est raide.

Malgré leur conception spécifique, ces conduites flexibles connues doivent être enfouies sous une hauteur de couverture importante pour éviter tout risque d'émergence d'une ou plusieurs boucles de flambage.

A titre indicatif, pour un diamètre intérieur de conduite compris entre 2 et 18 pouces, et une pression de service comprise entre 100 et 400 bars, la hauteur de couverture est comprise habituellement entre 1 m 50 et 2 m 50 et la pose des conduites est en conséquence considérablement longue et coûteuse.

Pour éviter l'apparition de boucles de flambage, on a cherché à concevoir des conduites flexibles dimensionnellement stables en longueur, spécialement destinées à l'ensouillage.

On a ainsi proposé dans la publication US 5 024 252 une conduite flexible spécialement destinée à l'ensouillage, du type "rough bore", comportant depuis le centre vers l'extérieur :

- une armure de résistance à l'écrasement, non étanche, encore appelé carcasse interne, typiquement constituée par l'enroulement hélicoïdal d'un profil agrafé, par exemple un feuillard d'acier,
- au moins une couche polymérique recouvrant ladite carcasse interne et constituant une barrière d'étanchéité,
- deux paires de nappes d'armures croisées de fils d'acier enroulés en hélice,
- une gaine polymérique externe de protection.

Les nappes d'armure de chaque paire sont croisées, c'est-à-dire que les fils qui les constituent sont enroulés avec des angles d'hélice opposés par rapport à la direction longitudinale de la conduite, de manière à ce que la conduite soit stable en torsion, et les angles d'enroulement sont choisis de manière à conférer à la conduite une stabilité dimensionnelle dans le sens de sa longueur. Les fils de l'une des paires de nappes croisées sont ainsi enroulés selon un angle d'hélice compris entre 40° et 53° et les fils de l'autre paire sont enroulés selon un angle d'hélice compris entre 57° et 70°, lesdits angles d'hélice étant mesurés par rapport à la direction longitudinale de la conduite.

On a encore proposé, dans la publication EP 147 288, une canalisation spécialement destinée à être ensouillée, également du type "rough bore", comportant depuis le centre vers l'extérieur :

- une carcasse interne,
- une barrière d'étanchéité,
- une armure assurant principalement la résistance à la composante circonférentielle de la pression interne, constituée par l'enroulement en hélice d'un fil d'acier selon un angle d'hélice supérieur à 85° par rapport à la direction longitudinale de la conduite, et de raideur $K_p$,
- deux nappes croisées de fils d'acier enroulés en hélice selon un angle au plus égal à 55°, assurant principalement la résistance à la traction, et de raideur $K_t$,
- une gaine de protection extérieure.

Le rapport $K_t/K_p$ est élevé, typiquement supérieur ou égal à 3, pour assurer la stabilité en longueur de la conduite.

Les conduites flexibles proposées dans les deux brevets précités sont relativement onéreuses. Une conduite flexible telle que décrite dans le brevet EP 147 288 peut même avoir tendance à se raccourcir sous l'effet d'une augmentation de la pression interne et à s'allonger lors du retour à une pression inférieure, selon la valeur du rapport $K_t/K_p$. Ainsi, lorsqu'une telle conduite flexible est posée dans une tranchée s'étendant au travers d'une dépression du fond sous-marin et décrit une boucle vers le bas pour suivre la concavité du fond, elle tend lors de sa mise sous pression à se raccourcir et à sortir de la tranchée. Une fois sortie de sa tranchée, en cas de diminution de la pression interne, la conduite s'allonge et forme une boucle de flambage émergente.

La présente invention a pour objet de remédier aux inconvénients précités et vise notamment à réduire le coût global des conduites flexibles installées par une diminution du coût de fabrication et du coût de pose.

L'invention y parvient grâce à l'utilisation nouvelle d'une conduite flexible comportant une barrière d'étanchéité et des armatures de résistance aux efforts mécaniques, disposées autour de ladite barrière d'étanchéité, ces armatures étant constituées par un ensemble d'au moins deux nappes croisées de fils enroulés en hélice, les angles d'enroulement respectifs $a_i$ des fils de ces nappes respectant les relations :

pour i = 1,2 ..., $52° \leq a_i \leq 58°$, de préférence $54° \leq a_i \leq 56°$,

la moyenne arithmétique $a_m$ de ces angles d'enroulement $a_i$ vérifiant en outre la relation :

$$53° \leq a_m \leq 57° \text{ et de préférence } 54° \leq a_m \leq 56°.$$

Ladite conduite flexible présente à l'état non ensouillé une complaisance élastique longitudinale lorsqu'elle est soumise à des variations de pression et/ou de température du fluide transporté, de telle sorte qu'après ensouillage à faible profondeur dans la tranchée, les forces de contact engendrées par le matériau de recouvrement s'opposent à ladite complaisance élastique longitudinale.

Les fils des nappes d'armure des conduites nouvellement utilisées pour être ensouillées, conformément à l'invention, sont ainsi enroulés selon des angles proches d'un angle particulier appelé angle d'équilibre, correspondant à l'obtention d'une conduite dimensionnellement stable lorsqu'en service. La valeur théorique de l'angle d'équilibre pour une conduite soumise uniquement à la pression interne ou à des variations de température, déterminée par le calcul de façon connue en soi, vaut 55° environ.

Dans la pratique, compte-tenu en particulier des tolérances de fabrication, les fils des nappes d'armure ne sont pratiquement jamais enroulés à l'angle d'équilibre. Toutefois, par abus de langage, on qualifiera dans la suite d'"équilibrées" les nappes d'armure lorsque les fils sont enroulés en hélice selon un angle d'enroulement vérifiant les relations précitées, donc proche de l'angle d'équilibre.

La présente invention repose sur la constatation inattendue et contraire aux préjugés existants qu'une conduite flexible, dont les armatures de résistance à la traction et à la pression interne, plus généralement de résistance aux efforts mécaniques, ne sont constituées que par des nappes d'armure croisées et équilibrées à l'exclusion de toute voûte de pression, peut être ensouillée ou recouverte avec une hauteur de couverture très inférieure à la hauteur de couverture nécessaire aux conduites antérieures destinées spécialement à l'ensouillage.

Dans le cas où la conduite flexible est disposée dans le fond d'une tranchée, la profondeur de cette tranchée peut être aussi faible que le diamètre externe de la conduite. La conduite est enfouie dans ce cas jusqu'à affleurement de sa surface supérieure et la hauteur de couverture peut être considérée comme quasi-nulle.

Toutefois, dans la pratique, à l'état libre, une conduite flexible dont les armatures de résistance aux efforts mécaniques sont constituées uniquement de nappes croisées et équilibrées n'est pas stable dimensionnellement, notamment dans le sens de la longueur, en raison du fait que l'angle d'enroulement des fils est rarement rigoureusement égal à l'angle d'équilibre, compte-tenu des tolérances de fabrication.

Les conduites flexibles de ce type n'ont donc été utilisées avant l'invention que suspendues immergées depuis des supports, par exemple des supports flottants ou plate-formes (on parle dans ce cas de "riser", ou "dumper"), ou posées sur le fond sous-marin sans recouvrement lorsque les conduites flexibles n'ont pas à être protégées.

Les variations de longueurs de telles conduites installées sont considérables et aléatoires, beaucoup plus importantes que pour les conduites flexibles spécifiques destinées à être ensouillées ou recouvertes, mais sans inconvénients dans les applications ci-dessus du fait de la liberté de déformation des conduites flexibles.

En revanche, ces variations de longueurs importantes et aléatoires ont conduit à écarter l'utilisation desdites conduites flexibles pour être ensouillées ou recouvertes, jusqu'à ce que la société déposante constate que, de façon surprenante, ce type de conduite ne flambait pas lorsqu'ensouillée ou recouverte.

Une tentative d'explication résiderait dans le fait que c'est la souplesse particulière, jusqu'alors inexploitée pour l'ensouillage ou le recouvrement, présentée par ce type de conduite flexible qui lui permettrait de ne pas flamber sous l'effet de la pression interne et/ou des variations de température, les forces de contact exercées par les sédiments ou le matériau de remblai sur la conduite flexible étant suffisantes, contre toute attente, pour empêcher la formation d'une ou plusieurs boucles de flambage de la conduite flexible. Grâce à l'invention, la hauteur de couverture peut ainsi ne pas excéder 0,5 m et la pose des conduites flexibles est considérablement simplifiée.

Selon une première caractéristique avantageuse de l'invention, la nappe d'armure la plus radialement interne est constituée par l'enroulement de fils profilés agrafés, ce qui permet d'obtenir une résistance accrue à la pression interne, comme décrit dans le brevet EP 489 896.

Selon une autre caractéristique avantageuse de l'invention, qui est avantageusement combinée à la première, la conduite flexible comporte plus de deux nappes croisées équilibrées.

De préférence, la conduite flexible est disposée dans le fond d'une tranchée creusée dans le fond sous-marin, la hauteur de couverture étant inférieure ou égale à 50 cm.

En variante, la conduite flexible est posée sur le fond sous-marin puis recouverte d'un matériau de remblai avec une hauteur de recouvrement inférieure ou égale à 0,5 m.

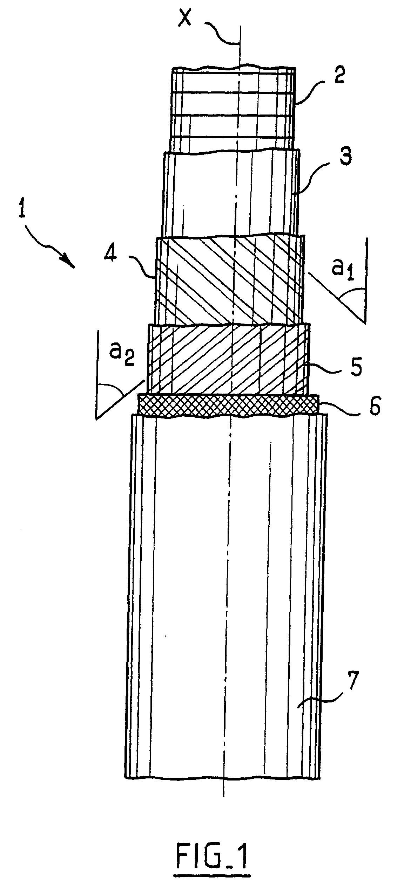

D'autres caractéristiques et avantages de la présente invention apparaîtront à la lecture de la description détaillée qui va suivre, d'un exemple de réalisation non limitatif de l'invention, et à l'examen du dessin sur lequel la figure 1 unique est une vue schématique, avec arrachement, qui montre les diverses couches constitutives d'une conduite flexible 1 destinée à être utilisée conformément à l'invention.

Cette conduite flexible 1 est du type comportant successivement, depuis le centre vers l'extérieur :

- une carcasse interne 2, non étanche, résistante à l'écrasement et à la pression extérieure, typiquement constituée de façon connue en soi par un enroulement hélicoïdal à faible pas d'un ou plusieurs profilés agrafés,
- une barrière d'étanchéité 3, typiquement constituée par une ou plusieurs couches en polymère,
- une première nappe d'armure 4 constituée de fils typiquement métalliques, enroulés en hélice autour de la barrière d'étanchéité 3 avec un angle d'enroulement $a_1$ par rapport à la direction longitudinale X de la conduite 1,
- une deuxième nappe d'armure 5 constituée de fils typiquement métalliques, enroulés en hélice autour de la première nappe d'armure 4 avec un angle d'enroulement $a_2$ opposé à celui des fils constituant la première nappe d'armure 4, de manière à conférer à la conduite flexible une stabilité en torsion,
- un revêtement intermédiaire 6, typiquement constitué par un ruban en matière textile,
- une gaine de protection 7, typiquement en matériau élastomère.

Dans un mode particulier de réalisation, la conduite flexible 1 présente un diamètre interne égal à 101,4 mm (4") et un diamètre externe égal à 152,4 mm (6"). La carcasse interne est constituée par l'enroulement hélicoïdal d'un feuillard d'acier agrafé de 40 mm de large, de 0,8 mm d'épaisseur, l'épaisseur de la carcasse étant égale à 4 mm. La barrière d'étanchéité 3 est constituée par une gaine en "Rilsan" de 5 mm d'épaisseur. La première nappe d'armure 4 est constituée de fils d'acier agrafés de section transversale en T, enroulés en hélice autour de la barrière d'étanchéité 3 avec un angle d'enroulement $a_1$ égal à 53,2°, l'épaisseur de la nappe d'armure 4 étant égale à 3 mm. La deuxième nappe d'armure 5 est constituée par l'enroulement en hélice autour de la première nappe d'armure 4 de fils d'acier de section rectangulaire avec un angle d'enroulement $a_2$ égal à 55,9°, l'épaisseur de la nappe d'armure 5 étant égale à 3 mm. Le revêtement intermédiaire 6 est constitué par un ruban en matière textile, d'épaisseur 0,5 mm. La gaine de protection 7 est constituée par une gaine de 5 mm d'épaisseur.

La pose de la conduite flexible s'effectue selon les mêmes techniques que celles déjà employées pour les conduites spécifiques connues destinées spécialement à l'ensouillage. Toutefois, la pose devient plus rapide et moins coûteuse grâce à l'invention puisque la hauteur de coùverture est moindre, voire nulle.

L'ensouillage d'une longueur de 650 m de conduite flexible correspondant à l'exemple de réalisation particulier précité, au fond d'une tranchée dont la profondeur et la largeur sont légèrement supérieures au diamètre externe de la conduite, a été réalisé. La conduite a été soumise dans un cas à une pression interne de test de 430 bars à température ambiante, dans un autre cas à pression atmosphérique à une température de 80°C, et dans un autre cas encore à une pression de service de 350 bars à une température de 60°C. Il n'a été constaté aucune formation d'une boucle de flambage, quelles que soient les conditions d'essai, même dans des conditions très sévères voisines de la pression d'éclatement de la conduite qui est de 500 bars dans l'exemple considéré, ce qui laisse penser que ce type de structure ne présente pas de pression critique à la différence des structures connues destinées à être ensouillées ou recouvertes.

Dans le cas où la conduite flexible est destinée à être utilisée pour le transport de fluides à très haute pression et à température élevée, on augmente avantageusement le nombre de nappes d'armure, l'angle d'enroulement $a_i$ des fils de chaque nappe d'armure i vérifiant:

$$58° \geq a_i \geq 52°$$

de préférence

$$56° \geq a_i \geq 54°,$$

la valeur moyenne arithmétique $a_m$ des angles d'enroulement des fils de l'ensemble des nappes d'armure i vérifiant la relation :

$$57° \geq a_m \geq 53°$$

de préférence

$$56° \geq a_m \geq 54°.$$

Finalement, l'invention, grâce à l'utilisation nouvelle et contraire aux préjugés existants d'une conduite flexible dont les armatures de résistance aux efforts mécaniques sont constituées de nappes d'armure croisées équilibrées, permet, quel que soit le diamètre interne de la conduite, de réduire le coût des conduites flexibles ensouillées grâce, d'une part, à la structure relativement simple et très répandue des conduites employées et, d'autre part, à la plus grande facilité de pose.

Bien entendu, l'invention s'applique à tout type de nappe d'armure, non seulement du type "unbounded" correspondant à l'exemple de réalisation de la figure 1, mais également du type "bounded layer", c'est-à-dire dont les fils sont noyés dans une matière plastique. Les fils peuvent présenter tout type de section transversale, rectangulaire ou autre, et peuvent être métalliques ou en un matériau composite. Les fils constituant la nappe d'armure adjacente à la barrière d'étanchéité peuvent être agrafés ou non. Toutefois, on obtiendra la meilleure résistance à la pression interne en réalisant la nappe d'armure adjacente à la barrière d'étanchéité en un fil profilé agrafé, comme décrit en référence à la figure 1, pouvant présenter en section transversale une forme générale en T, en U ou en Z. En variante, la carcasse interne peut être constituée de fils profilés agrafés de sections transversales différentes, par exemple des fils de sections transversales respectives en U et en T, comme cela est connu par le FR-A-2 664 019 notamment.

L'invention s'applique à toute conduite flexible comportant, outre les nappes d'armure de résistance aux efforts mécaniques, équilibrées et disposées autour de la barrière d'étanchéité, une ou plusieurs couches supplémentaires disposées soit entre les nappes d'armure, soit sous ou sur ces dernières, et destinées par exemple à remédier à un problème de fabrication spécifique de la conduite.

Ces couches supplémentaires qui ne participent pas à la résistance mécanique de la conduite flexible et qui ne constituent pas des nappes d'armure au sens de la présente invention, peuvent présenter des angles d'enroulement divers compris entre 10 et 90° sans que l'on sorte du cadre de la présente invention.

L'invention s'applique aussi bien à une conduite flexible de type "rough bore" comme décrit précédemment, c'est-à-dire comportant une carcasse interne, non étanche, de résistance à l'écrasement, qu'à une conduite de type "smooth bore", sans carcasse interne.

## Revendications

1. Utilisation d'une conduite flexible au transport d'un fluide et destinée à être ensouillée dans une tranchée creusée dans le fond sous-marin, ladite conduite flexible comprenant de l'intérieur vers l'extérieur une carcasse métallique, une gaine d'étanchéité interne disposée autour de la carcasse métallique, des armures de résistance aux efforts mécaniques, sans interposition d'une voûte de pression entre ladite gaine d'étanchéité interne et lesdites armures de résistance qui sont constituées chacune par un fil enroulé en hélice avec des angles d'enroulement respectifs $a_i$ par rapport à la direction longitudinale de la conduite flexible vérifiant les relations suivantes :
pour i = 1, 2 ... $52° \leq a_i \leq 58°$, et la valeur moyenne arithmétique $a_m$ desdits angles d'enroulement $a$; vérifiant la relation $53° \leq a_m \leq 57°$ ;
**caractérisée en ce que** ladite conduite flexible présente à l'état non ensouillé une complaisance élastique longitudinale lorsqu'elle est soumise à des variations de pression et/ou de température du fluide transporté, de telle sorte qu'après ensouillage à faible profondeur dans la tranchée, les forces de contact engendrées par le matériau de recouvrement s'opposent à ladite complaisance élastique longitudinale.

2. Utilisation d'une conduite flexible selon la revendication 1, **caractérisée par le fait que** lesdits angles d'enroulement $a_i$ vérifient les relations :
pour i = 1,2...,

$$54° \leq a_i \leq 56°$$

3. Utilisation d'une conduite flexible selon l'une des revendications 1 et 2, **caractérisée par le fait que** la

moyenne arithmétique $a_m$ vérifie la relation :

$$54° \leq a_m \leq 56°$$

4. Utilisation d'une conduite flexible selon l'une quelconque des revendications 1 à 3, **caractérisée par le fait que** la conduite comporte une carcasse interne (2) sous la barrière d'étanchéité (3).

5. Utilisation d'une conduite flexible selon l'une quelconque des revendications précédentes, **caractérisée par le fait que** la nappe d'armure (4) adjacente à ladite barrière d'étanchéité (3) est constituée par l'enroulement de fils profilés agrafés.

6. Utilisation d'une conduite flexible selon l'une des revendications 1 à 5, **caractérisée par le fait que** la conduite flexible est disposée dans une tranchée creusée dans le fond sous-marin et **par le fait que** la hauteur de couverture est inférieure ou égale à 0,5 m.

7. Utilisation d'une conduite flexible selon l'une quelconque des revendications 1 à 5, **caractérisée par le fait que** la conduite est posée sur le fond marin puis recouverte par un matériau de remblai avec une hauteur de couverture inférieure ou égale à 0,5 mètre.

**Patentansprüche**

1. Verwendung einer flexiblen Fluidtransport-Rohrleitung, die dazu bestimmt ist, in einen hohlen Graben im Meeresboden eingelegt zu werden, wobei die flexible Rohrleitung von innen nach außen ein Metallgitter, eine innere Dichtungshülle, die um das Metallgitter angeordnet ist, und Bewehrungen, die mechanischen Kräften einen Widerstand entgegensetzen, umfaßt, ohne daß zwischen der inneren Dichtungshülle und den Widerstandsbewehrungen ein Druckgewölbe vorhanden ist, wobei die Widerstandsbewehrungen jeweils durch eine Faser gebildet sind, die schraubenlinienförmig unter jeweiligen Wicklungswinkeln $a_i$ in bezug auf die Längsrichtung der flexiblen Rohrleitung gewickelt sind, welche die folgenden Beziehungen erfüllen: für i = 1, 2, ...: $52° \leq a_i \leq 58°$, wobei der arithmetische Mittelwert $a_m$ der Wicklungswinkel $a_i$ die Beziehung $53° \leq a_m \leq 57°$ erfüllt; **dadurch gekennzeichnet, daß** die flexible Rohrleitung im nicht eingelegten Zustand eine in Längsrichtung elastische Nachgiebigkeit aufweist, wenn sie Druckänderungen und/oder Temperaturänderungen des transportierten Fluids unterworfen wird, derart, daß nach dem Einlegen in geringer Tiefe in den Graben die durch das Abdeckmaterial erzeugten Kontaktkräfte der in Längsrichtung elastischen Nachgiebigkeit entgegenwirken.

2. Verwendung einer flexiblen Rohrleitung nach Anspruch 1, **dadurch gekennzeichnet, daß** die Wicklungswinkel $a_i$ die folgenden Beziehungen erfüllen: für i = 1, 2, ...:

$$54° \leq a_i \leq 56°.$$

3. Verwendung einer flexiblen Rohrleitung nach einem der Ansprüche 1 und 2, **dadurch gekennzeichnet, daß** das arithmetische Mittel $a_m$ die folgende Beziehung erfüllt:

$$54° \leq a_m \leq 56°.$$

4. Verwendung einer flexiblen Rohrleitung nach einem der Ansprüche 1 bis 3, **dadurch gekennzeichnet, daß** die Rohrleitung unter der Dichtungssperre (3) eine innere Karkasse (2) aufweist.

5. Verwendung einer flexiblen Rohrleitung nach einem der vorhergehenden Ansprüche, **dadurch gekennzeichnet, daß** der der Dichtungssperre (3) benachbarte Bewehrungsmantel (4) durch die Wicklung miteinander verhakter, profilierter Fasern gebildet ist.

6. Verwendung einer flexiblen Rohrleitung nach einem der Ansprüche 1 bis 5, **dadurch gekennzeichnet, daß** die flexible Rohrleitung in einem hohlen Graben im Meeresboden angeordnet ist und daß die Höhe der Abdeckung kleiner oder gleich 0,5 m ist.

7. Verwendung einer flexiblen Rohrleitung nach einem der Ansprüche 1 bis 5, **dadurch gekennzeichnet, daß** die Rohrleitung auf den Meeresboden gelegt wird und dann durch ein Schüttmaterial mit einer Abdeckhöhe kleiner oder gleich 0,5 Meter bedeckt wird.

**Claims**

1. Use of a flexible pipeline for transporting fluid, which is to be buried in a trench dug in the seabed, said pipeline comprising, from inside outwards, a metallic carcass, an inner sealing sheath around the metallic carcass, armours for withstanding mechanical stresses, without any pressure vault being interposed between said sealing sheath and said withstanding armours which each consist of a wire helically wound at respective winding angles $a_i$ with respect to the longitudinal direction of the pipeline, satisfying the following relationships:

for i = 1, 2, ..., $52° \leq a_i \leq 58°$ and the arithmetic mean value $a_m$ of the said winding angles $a_i$ satisfying the relationship: $53° \leq a_m \leq 57°$;

**characterized in that** said flexible pipeline has in the non buried condition a longitudinal elastic compliance when submitted to variations of pressure and/or temperature of the transported fluid, such that, after burying at a small depth in the trench, the contact forces generated by the covering material oppose said longitudinal elastic compliance.

2. Use of a flexible pipeline according to Claim 1, **characterized in that** the said winding angles $a_i$ satisfy the relationships:

for i = 1, 2, ..., $54° \leq a_i \leq 56°$.

3. Use of a flexible pipeline according to one of Claims 1 and 2, **characterized in that** the arithmetic mean $a_m$ satisfies the relationship:

$$54° \leq a_m \leq 56°.$$

4. Use of a flexible pipeline according to any one of Claims 1 to 3, **characterized in that** the pipeline comprises an internal carcass (2) under the sealing barrier (3).

5. Use of a flexible pipeline according to any one of the preceding claims, **characterized in that** the reinforcing ply (4) adjacent to the said sealing barrier (3) consists of the winding of clipped profiled wires.

6. Use of a flexible pipeline according to one of Claims 1 to 5, **characterized in that** the flexible pipeline is placed in a trench dug in the seabed and **in that** the depth of cover is less than or equal to 0.5 m.

7. Use of a flexible pipeline according to any one of Claims 1 to 5, **characterized in that** the pipeline is laid on the seabed then covered with a filling material to a depth of cover of less than or equal to 0.5 m.

FIG.1